# FASCICULE DE BREVET EUROPEEN

(11) **EP 2 633 224 B1**
(45) Date de publication et mention de la délivrance du brevet: **03.12.2014**
(21) Numéro de dépôt: 11779825.6
(22) Date de dépôt: 10.10.2011
(51) Int. Cl.: F17C 13/04

(54) **PROCÉDÉ DE FIXATION D'UN ÉQUIPEMENT SUR UNE PAROI ET RÉSERVOIR CORRESPONDANT**
VERFAHREN ZUR FIXIERUNG EINES GERÄTETEILES AN EINER WAND UND ZUGEHÖRIGER TANK
METHOD FOR FIXING AN ITEM OF EQUIPMENT TO A WALL AND CORRESPONDING TANK

(30) Priorité: 27.10.2010 FR 1058813
(43) Date de publication de la demande: 04.09.2013
(73) Titulaire: L'Air Liquide Société Anonyme pour l'Etude et l'Exploitation des Procédés Georges Claude, 75007 Paris (FR)
(72) Inventeur: BUTTERWORTH, James, F-38600 Fontaine (FR)
(74) Mandataire: De Cuenca, Emmanuel Jaime
(86) Numéro de dépôt international: PCT/FR2011/052355
(87) Numéro de publication internationale: WO 2012/056139

(56) Documents cités:
- EP-A1- 1 876 382
- DE-A1- 2 346 694
- FR-A1- 2 932 243
- US-A1- 2009 155 648
- US-B1- 7 811 406

## Description

La présente invention concerne un procédé de fixation d'un équipement sur une paroi ainsi qu'un réservoir correspondant.

L'invention concerne notamment un procédé de fixation d'un équipement sur la surface interne d'une paroi d'une canalisation d'oxygène cryogénique ou d'un réservoir de fluide cryogénique destiné à contenir de l'oxygène liquide.

L'invention concerne plus particulièrement un système de fixation par collage pour le montage d'équipements à l'intérieur d'un réservoir cryogénique contenant ou pouvant contenir de l'oxygène. Un tel réservoir peut par exemple faire partie d'un lanceur spatial ou de tout autre système de stockage ou de transport d'oxygène liquide. L'équipement à fixer dans le réservoir peut être, par exemple, un ou des dispositifs de mesure (tels que des sondes de température ou de niveau...), des tuyauteries, des déflecteurs ou tout autre dispositif pour contrôler ou mesurer le déplacement des fluides à l'intérieur du réservoir.

L'invention peut notamment être utilisée pour assurer le montage, dans un réservoir, d'une paroi déflectrice telle que décrite dans les documents FR2919852 ou FR2941678.

L'invention peut également s'appliquer aux équipements montés sur tout système pouvant être exposé à l'oxygène ou l'air liquide tels que des canalisations pour fluides cryogéniques.

Sont connues, des techniques de fixation sur les parois de contenants et de canalisations cryogéniques par serrage mécanique, par soudure/brasure et par collage. Selon la géométrie de la paroi, la fixation par serrage mécanique peut nécessiter des modifications de cette dernière (ex. perçage de trous, support rapporté, etc.) et une altération de ses propriétés telles que l'étanchéité, la tenue mécanique ou la masse. La fixation par soudure n'est applicable qu'à certains couples de matériaux et nécessite souvent une modification de la géométrie de la paroi, surtout si cette dernière est de faible épaisseur. Les températures élevées qui sont nécessaires peuvent provoquer une altération des propriétés des matériaux. La fixation par collage est généralement plus versatile que les techniques précédentes. Elle permet de raccorder un grand nombre de matériaux homogènes ou hétérogènes et sa mise en oeuvre est relativement simple. Elle ne nécessite pas de modification de la géométrie de la paroi. Le collage d'isolant dans un réservoir au moyen d'une couche ayant une structure de mousse à cellules ouvertes est connu de FR 2 932 243.

Or, les contraintes liées à la fragilisation des matériaux à basse température et à la contraction thermique différentielle entre la colle et les matériaux à coller rendent la sélection d'une colle particulièrement critique pour les applications cryogéniques. Certaines colles, notamment certains époxys, silicones et uréthanes, sont connus pour leurs applications en cryogénie. Toutefois, ces colles ne sont pas chimiquement compatibles avec des comburants puissants tels que l'oxygène liquide, ce qui provoque un risque important d'inflammation en cas d'apport d'énergie tel qu'un choc mécanique ou une décharge électrostatique.

La grande majorité des matières plastiques et des adhésifs utilisés pour le montage d'équipement dans des réservoirs posent des problèmes de sécurité car ces matériaux sont susceptibles de générer un incendie lorsqu'ils sont exposés à un comburant puissant tel que l'oxygène liquide. Le collage des équipements à l'intérieur d'un réservoir d'oxygène liquide nécessite une sélection rigoureuse des matériaux utilisés et de la structure de montage.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce qu'une couche de matériau poreux est interposée entre la paroi et l'équipement.

Des modes de réalisation de l'invention peuvent comporter des caractéristiques conformément aux revendications.

Par ailleurs, on peut envisager que :
- la couche de matériau poreux soit fixée sur la paroi puis l'équipement est fixé sur la couche de matériau poreux,
- l'équipement soit fixé sur la couche dé matériau poreux puis la couche de matériau poreux est fixée sur la paroi,
- la couche de matériau poreux possède une première surface qui est fixée à la paroi et une seconde surface sur laquelle est fixé l'équipement,
- la couche de matériau poreux soit fixée sur la paroi du réservoir par collage,
- la couche de matériau poreux soit fixée sur la paroi du réservoir par collage au moyen d'une résine de type inorganique telle qu'une solution aqueuse de silicate de sodium et/ou une solution aqueuse de silicate de potassium.
- la couche de matériau poreux comprenne ou soit constituée de l'un au moins des matériaux suivants : un plastique isolant expansé, un polymère expansé, du polytétrafluoroéthylène (PTFE) expansé, du polytétrafluoroéthylène (PTFE) filamentaire ou fritté,
- l'équipement comprend l'un au moins parmi : un élément de tuyauterie, une paroi déflectrice, un appareil de mesure tel qu'un capteur de température ou un capteur de niveau ou un capteur de pression, un élément structurel tel qu'un support ou un renfort,
- la face de l'équipement fixée sur la couche de matériau poreux soit constituée de l'un au moins des matériaux ci-après : un matériau métallique, de la céramique, un polymère, un matériau vitreux, un matériau cristallin,
- l'équipement soit fixé sur la couche de matériau poreux par collage au moyen d'une résine telle qu'une résine inorganique,
- la face de l'équipement fixée sur la couche de matériau poreux comporte un film ou une couche de tissu comprenant un polymère isolant tel qu'un fluoropolymère, notamment du polytétrafluoroéthylène (TEFLON®), le film ou la couche étant fixée sur la couche de matériau poreux par thermo-scellage,
- la couche de matériau poreux constitue un support structurel (de préférence l'unique support structurel) pour l'équipement.

L'invention concerne également un réservoir ou une canalisation d'oxygène liquide obtenue selon ce procédé ainsi que leur utilisation.

L'invention concerne notamment un réservoir d'oxygène liquide comprenant un volume de stockage de fluide délimité par une paroi et un équipement fixé sur la surface de ladite paroi formant la surface interne réservoir, l'équipement étant fixé sur la paroi indirectement via une couche de matériau poreux interposée entre la paroi et l'équipement, conformément aux revendications.

L'invention concerne également un lanceur spatial comprenant un réservoir

L'invention concerne en particulier une fixation d'un équipement utilisant l'association d'une couche intermédiaire en matériau poreux en PTFE expansé collé via une colle inorganique conformément aux revendications. Contre toute attente, cette fixation assure une tenue mécanique de l'équipement sur la paroi et est compatible avec un environnement d'oxygène liquide.

D'autres particularités et avantages apparaîtrons à la lecture de la description ci-après, faite en référence aux figures dans lesquelles :
- la figure 1 représente une coupe, schématique et partielle, d'un premier exemple de fixation d'un équipement sur la paroi d'un réservoir selon l'invention,
- la figure 2 représente une coupe, schématique et partielle, d'un second exemple de fixation d'un équipement sur la paroi d'un réservoir selon l'invention.

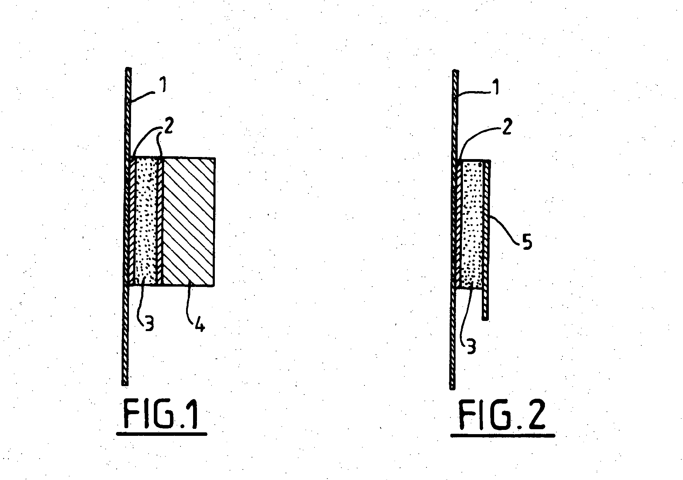

En se référant à la figure 1, le système de fixation comporte les deux surfaces qui doivent être rendues solidaires : d'une part la paroi 1 d'un réservoir (ou d'une canalisation ou tout autre contenant) et, d'autre part, la surface d'un équipement 4.

Selon une particularité avantageuse, une couche 3 de matériau poreux est intercalée entre les deux éléments 1, 4 à assembler.

De préférence, la couche 3 de matériau poreux est fixée à la paroi 1 par collage avec une résine 2 inorganique. De même, de préférence, l'équipement 4 est fixé à la couche 3 de matériau poreux par collage avec une résine 2 inorganique.

Le matériau poreux de la couche 3 permet ainsi l'évacuation des vapeurs provenant de l'évaporation du solvant présent dans la résine 2 de collage.

La résine 2 inorganique utilisée peut être par exemple à base d'une solution aqueuse de silicates de sodium ou éventuellement de potassium.

Le matériau poreux constituant la couche 3 est quant à lui de préférence du PTFE expansé.

Ce matériau poreux 3 est de préférence collé sur la paroi 1 fixe à l'aide d'une couche 2 de résine inorganique.

La surface à fixer de l'équipement 4 peut être métallique, céramique, polymérique, vitreuse ou cristalline. Comme représenté à la figure 1, cette surface peut être collée sur le matériau poreux 3 à l'aide d'une couche de résine 2 inorganique.

Alternativement, et comme représenté partiellement à la figure 2, l'équipement (qui n'est pas représenté à la figure 2) peut comporter un film 5 ou un tissu revêtu de fluoropolymère. Cette face comprenant ce film 5 (ou tissu ou tout autre matériau compatible) peut être thermo-scellé directement sur la couche 3 de matériau poreux en PTFE expansé. C'est-à-dire que l'équipement 4 est fixé à la couche 3 de matériau poreux avant le collage de cette couche 3 de matériau poreux sur la paroi 1 fixe.

De préférence, la structure d'assemblage utilise uniquement des matériaux qui ont été démontrés compatibles avec l'oxygène liquide sous l'effort d'un choc mécanique selon la norme NF EN 1797.

La couche 3 de matériau poreux a, par exemple, une épaisseur comprise entre 3 et 20 mm et de préférence entre 6 et 10 mm.

De même, la ou les couches 2 de collage en résine ont par exemple une épaisseur comprise entre 0,01 mm et 5 mm plus particulièrement entre 0,1 mm et 1 mm.

Tout en étant de structure simple et peu coûteuse, l'invention permet une fixation fiable, rigide et en toute sécurité, notamment lorsque le système de fixation est soumis à un environnement contenant une forte proportion d'oxygène liquide et/ou gazeux.

## Revendications

1. Procédé de fixation d'un équipement (4) sur la surface interne d'une paroi (1) d'une canalisation d'oxygène cryogénique ou d'un réservoir cryogénique destinéà contenir de l'oxygène liquide, l'équipement comprenant l'un au moins parmi : un élément de tuyauterie, une paroi déflectrice, un appareil de mesure tel qu'un capteur de température ou un capteur de niveau ou un capteur de pression, un élément structurel choisi parmi un support ou un renfort, le procédé étant **caractérisé en ce qu'**une couche (3) de matériau poreux est interposée entre la paroi (1) et l'équipement (4), l'équipement (4) étant fixé sur la paroi (1) indirectement via la couche (3) de matériau poreux, la couche (3) de matériau poreux comprenant ou étant constituée de l'un au moins des matériaux suivants : du polytétrafluoroéthylène (PTFE) expansé, du polytétrafluoroéthylène (PTFE) filamentaire ou fritté, la couche (3) de matériau poreux étant fixée sur la paroi (1) par collage au moyen d'une résine de type inorganique telle qu'une solution aqueuse de silicate de sodium et/ou une solution aqueuse de silicate de potassium, l'équipement (4) étant fixé sur la couche (3) de matériau poreux par collage au moyen d'une résine inorganique.

2. Procédé selon la revendication 1, **caractérisé en ce que** la couche (3) de matériau poreux est fixée sur la paroi (1) puis l'équipement (4) est fixé sur la couche (3) de matériau poreux.

3. Procédé selon la revendication 1, **caractérisé en ce que** l'équipement (4) est fixé sur la couche (3) de matériau poreux puis la couche (3) de matériau poreux qui est fixée sur la paroi (1).

4. Procédé selon l'une quelconque des revendications 1 à 3, **caractérisé en ce que** la couche (3) de matériau poreux possède une première surface qui est fixée à la paroi (1) et une seconde surface sur laquelle est fixé l'équipement (4).

5. Procédé selon l'une quelconque des revendications 1 à 4, **caractérisé en ce que** la face de l'équipement (4) fixée sur la couche (3) de matériau poreux est constituée de l'un au moins des matériaux ci-après : un matériau métallique, de la céramique, un polymère, un matériau vitreux, un matériau cristallin.

6. Procédé selon l'une quelconque des revendications 1 ou 5, **caractérisé en ce que** la fixation par collage forme une couche (2) de collage ayant une épaisseur comprise entre 0,01 mm et 5 mm et de préférence entre 0,1 mm et 1 mm.

7. Procédé selon l'une quelconque des revendications 1 à 6, **caractérisé en ce que** la face de l'équipement (4) fixée sur la couche (3) de matériau poreux comporte un film (5) ou une couche de tissu comprenant un polymère isolant tel qu'un fluoropolymère, notamment du polytétrafluoroéthylène, le film (5) ou la couche étant fixée sur la couche (3) de matériau poreux par thermoscellage.

8. Réservoir d'oxygène liquide comprenant un volume de stockage de fluide délimité par une paroi (1) et un équipement (4) fixé sur ta surface de ladite paroi (1) formant la surface interne réservoir, l'équipement (4) comprenant l'un au moins parmi : un élément de tuyauterie, une paroi déflectrice, un appareil de mesure tel qu'un capteur de température ou un capteur de niveau ou un capteur de pression, un élément structurel choisi parmi un support ou un renfort, **caractérisé en ce que** l'équipement (4) est fixé sur la paroi (1) indirectement via une couche (3) de matériau poreux interposée entre la paroi (1) et l'équipement (4), la couche (3) de matériau poreux comprenant ou étant constituée de l'un au moins des matériaux suivants : du polytétrafluoroéthylène (PTFE) expansé, du polytétrafluoroéthylène (PTFE) filamentaire ou fritté, la couche (3) de matériau poreux étant fixée sur la paroi (1) par collage au moyen d'une résine de type inorganique telle qu'une solution aqueuse de silicate de sodium et/ou une solution aqueuse de silicate de potassium, l'équipement (4) étant fixé sur la couche (3) de matériau poreux par collage au moyen d'une résine inorganique.

9. Réservoir selon la revendication 8, **caractérisé en ce que** la couche (3) de matériau poreux est souple.

10. Réservoir selon la revendication 8 ou 9, **caractérisé en ce que** la couche (3) de matériau poreux a une épaisseur comprise de préférence entre 2 et 20 mm ou entre 3 et 20mm ou entre 2 et 10 mm et de façon encore plus préférentielle entre 2 et 3 mm.

11. Réservoir selon l'une quelconque des revendications 8 à 10, **caractérisé en ce que** l'équipement (4) est maintenu et accroché mécaniquement sur la paroi (1) uniquement via la couche (3) de matériau poreux intermédiaire.

12. Réservoir selon l'une quelconque des revendications 8 à 11, **caractérisé en ce que** l'équipement (4) est fixé sur la paroi (1) via la couche (3) de matériau poreux intermédiaire.

13. Lanceur spatial comprenant un réservoir d'oxygène liquide selon l'une quelconque des revendications 8 à 12.

## Patentansprüche

1. Verfahren zur Befestigung einer Einrichtung (4) an der Innenfläche einer Wand (1) einer Rohrleitung für kryogenen Sauerstoff oder eines Kryo-Tanks, der dazu bestimmt ist, Flüssigsauerstoff zu enthalten, wobei die Einrichtung mindestens eines aus folgenden umfasst: ein Rohrleitungselement, eine Ablenkwand, ein Messgerät wie einen Temperaturfühler oder einen Füllstandsensor oder einen Drucksensor, ein strukturelles Element, das aus einer Halterung oder einer Versteifung ausgewählt ist, wobei das Verfahren **dadurch gekennzeichnet ist, dass** eine Schicht (3) aus porösem Material zwischen der Wand (1) und der Einrichtung (4) eingebracht wird, wobei die Einrichtung (4) an der Wand (1) indirekt über die Schicht (3) aus porösem Material befestigt wird, wobei die Schicht (3) aus porösem Material mindestens eines der folgenden Materialien enthält oder daraus besteht: geschäumtes Polytetrafluorethylen (PTFE), faserartiges oder gesintertes Polytetrafluorethylen (PTFE), wobei die Schicht (3) aus porösem Material an der Wand (1) durch Kleben mittels eines Harzes des anorganischen Typs, wie eine wässrige Natriumsilikatlösung und/oder eine wässrige Kaliumsilikatlösung, befestigt wird, wobei die Einrichtung (4) an der Schicht (3) aus porösem Material durch Kleben mittels eines anorganischen Harzes befestigt wird.

2. Verfahren nach Anspruch 1, **dadurch gekennzeichnet, dass** die Schicht (3) aus porösem Material an der Wand (1) befestigt wird und anschließend die Einrichtung (4) an der Schicht (3) aus porösem Material befestigt wird.

3. Verfahren nach Anspruch 1, **dadurch gekennzeichnet, dass** die Einrichtung (4) an der Schicht (3) aus porösem Material befestigt wird und anschließend die Schicht (3) aus porösem Material an der Wand (1) befestigt wird.

4. Verfahren nach einem der Ansprüche 1 bis 3, **dadurch gekennzeichnet, dass** die Schicht (3) aus porösem Material eine erste Oberfläche aufweist, die an der Wand (1) befestigt wird, und eine zweite Oberfläche aufweist, die an der Einrichtung (4) befestigt wird.

5. Verfahren nach einem der Ansprüche 1 bis 4, **dadurch gekennzeichnet, dass** die Fläche der Einrichtung (4), die an der Schicht (3) aus porösem Material befestigt wird, aus mindestens einem der folgenden Materialien besteht: ein metallisches Material, Keramik, ein Polymer, ein glasartiges Material, ein kristallines Material.

6. Verfahren nach einem der Ansprüche 1 oder 5, **dadurch gekennzeichnet, dass** die Befestigung durch Kleben eine Klebeschicht (2) bildet mit einer Dicke, die zwischen 0,01 mm und 5 mm und vorzugsweise zwischen 0,1 mm und 1 mm beträgt.

7. Verfahren nach einem der Ansprüche 1 bis 6, **dadurch gekennzeichnet, dass** die Fläche der Einrichtung (4), die an der Schicht (3) aus porösem Material befestigt wird, eine Folie (5) oder eine Gewebeschicht aufweist, die ein isolierendes Polymer enthält wie Fluorpolymer, insbesondere Polytetrafluorethylen, wobei die Folie (5) oder die Schicht an der Schicht (3) aus porösem Material durch Heißsiegeln befestigt wird.

8. Tank für Flüssigsauerstoff, umfassend ein Fluid-Bevorratungsvolumen, das durch eine Wand (1) und eine Einrichtung (4) begrenzt wird, die an der Oberfläche der Wand (1), welche die Tankinnenfläche bildet, befestigt wird, wobei die Einrichtung (4) mindestens eines aus Folgenden umfasst: ein Rohrleitungselement, eine Ablenkwand, ein Messgerät wie einen Temperaturfühler oder einen Füllstandsensor oder einen Drucksensor, ein strukturelles Element, das aus einer Halterung oder einer Versteifung ausgewählt ist, **dadurch gekennzeichnet, dass** die Einrichtung (4) an der Wand (1) indirekt über eine Schicht (3) aus porösem Material befestigt wird, die zwischen der Wand (1) und der Einrichtung (4) eingebracht wird, wobei die Schicht (3) aus porösem Material mindestens eines der folgenden Materialien enthält oder daraus besteht: geschäumtes Polytetrafluorethylen (PTFE), faserartiges oder gesintertes Polytetrafluorethylen (PTFE), wobei die Schicht (3) aus porösem Material an der Wand (1) durch Kleben mittels eines Harzes des anorganischen Typs, wie eine wässrige Natriumsilikatlösung und/oder eine wässrige Kaliumsilikatlösung, befestigt wird, wobei die Einrichtung (4) an der Schicht (3) aus porösem Material durch Kleben mittels eines anorganischen Harzes befestigt wird.

9. Tank nach Anspruch 8, **dadurch gekennzeichnet, dass** die Schicht (3) aus porösem Material flexibel ist.

10. Tank nach Anspruch 8 oder 9, **dadurch gekennzeichnet, dass** die Schicht (3) aus porösem Material eine Dicke aufweist, die vorzugsweise zwischen 2 und 20 mm oder zwischen 3 und 20 mm oder zwischen 2 und 10 mm und noch weiter bevorzugt zwischen 2 und 3 mm beträgt.

11. Tank nach einem der Ansprüche 8 bis 10, **dadurch gekennzeichnet, dass** die Einrichtung (4) an der Wand (1) einzig über die Zwischenschicht (3) aus porösem Material mechanisch gehalten und befestigt wird.

12. Tank nach einem der Ansprüche 8 bis 11, **dadurch gekennzeichnet, dass** die Einrichtung (4) an der Wand (1) über die Zwischenschicht (3) aus porösem Material befestigt wird.

13. Startrakete umfassend einen Tank für Flüssigsauerstoff nach einem der Ansprüche 8 bis 12.

## Claims

1. Method for fixing a device (4) to the internal surface of a wall (1) of a cryogenic oxygen duct or of a cryogenic tank intended to contain liquid oxygen, the device comprising at least one of:
a piping element;
a deflecting wall;
a measuring apparatus such as a temperature sensor, a level sensor or a pressure sensor;
a structural element selected from a support or a reinforcement, the method being **characterised in that** a layer (3) of porous material is interposed between the wall (1) and the device (4), the device (4) being fixed to the wall (1) indirectly via the layer (3) of porous material, the layer (3) of porous material comprising or consisting of at least one of the following materials: expanded polytetrafluoroethylene (PTFE), or filament- or sintered polytetrafluoroethylene (PTFE);
the layer (3) of porous material being fixed to the wall (1) by bonding by means of an inorganic resin such as an aqueous solution of sodium silicate and/or an aqueous solution of potassium silicate;
the device (4) being fixed to the layer (3) of porous material by bonding by means of an inorganic resin.

2. Method according to claim 1, **characterised in that** the layer (3) of porous material is fixed to the wall (1), then the device (4) is fixed to the layer (3) of porous material.

3. Method according to claim 1, **characterised in that** the device (4) is fixed to the layer (3) of porous material, then the layer (3) of porous material is fixed to the wall (1).

4. Method according to any of claims 1 to 3, **characterised in that** the layer (3) of porous material has a first surface which is fixed to the wall (1) and a second surface to which the device (4) is fixed.

5. Method according to any of claims 1 to 4, **characterised in that** the face of the device (4) that is fixed to the layer (3) of porous material consists of at least one of the following materials: a metal material, ceramic, a polymer, a vitreous material or a crystalline material.

6. Method according to either claim 1 or claim 5, **characterised in that** the fixing by bonding forms a bonding layer (2) having a thickness of between 0.01 mm and 5 mm, preferably between 0.1 mm and 1 mm.

7. Method according to any of claims 1 to 6, **characterised in that** the face of the device (4) that is fixed to the layer (3) of porous material comprises a film (5) or a layer of fabric comprising an insulating polymer such as a fluoropolymer, in particular polytetrafluoroethylene, the film (5) or the layer being fixed to the layer (3) of porous material by heat-sealing.

8. Liquid oxygen tank comprising a fluid storage volume, delimited by a wall (1), and a device (4) fixed to the surface of said wall (1) forming the internal tank surface, the device (4) comprising at least one of:
a piping element;
a deflecting wall;
a measuring apparatus such as a temperature sensor, a level sensor, or a pressure sensor;
a structural element selected from a support or a reinforcement, **characterised in that** the device (4) is fixed to the wall (1) indirectly via a layer (3) of porous material interposed between the wall (1) and the device (4), the layer (3) of porous material comprising or consisting of at least one of the following materials: expanded polytetrafluoroethylene (PTFE), or filament- or sintered polytetrafluoroethylene (PTFE), the layer (3) of porous material being fixed to the wall (1) by bonding by means of an inorganic resin such as an aqueous solution of sodium silicate and/or an aqueous solution of potassium silicate, the device (4) being fixed to the layer (3) of porous material by bonding by means of an inorganic resin.

9. Tank according to claim 8, **characterised in that** the layer (3) of porous material is flexible.

10. Tank according to either claim 8 or claim 9, **characterised in that** the layer (3) of porous material has a thickness of preferably between 2 and 20 mm, or of between 3 and 20 mm, or of between 2 and 10 mm and even more preferably of between 2 and 3 mm.

11. Tank according to any of claims 8 to 10, **characterised in that** the device (4) is secured and mechanically attached to the wall (1) only via the intermediate layer (3) of porous material.

12. Tank according to any of claims 8 to 11, **characterised in that** the device (4) is fixed to the wall (1) via the intermediate layer (3) of porous material.

13. Space launcher comprising a liquid oxygen tank according to any of claims 8 to 12.
